# EUROPEAN PATENT SPECIFICATION

(11) **EP 3 575 660 B1**
(45) Date of publication and mention of the grant of the patent: **23.02.2022**
(21) Application number: 18174767.6
(22) Date of filing: 29.05.2018
(51) Int. Cl.: F16L 41/00, F16L 55/24, F16L 13/08, F28F 9/02, F28F 9/18, F16L 13/02, F16L 25/14

(54) **CONNECTOR TO CONNECT TWO PORTIONS OF A FLUID REFRIGERANT CIRCUIT**
STECKVERBINDER ZUR VERBINDUNG VON ZWEI TEILEN EINES FLÜSSIGKÄLTEMITTELKREISLAUFS
CONNECTEUR SERVANT À CONNECTER DEUX PARTIES D'UN CIRCUIT DE FLUIDE FRIGORIGÈNE

(43) Date of publication of application: 04.12.2019
(73) Proprietor: Valeo Vyminiky Tepla, s.r.o., 267 53 Zebrak (CZ)
(72) Inventor: Forst, Jan, 267 53 Zebrak (CZ); Albl, Jakub, 267 53 Zebrak (CZ); Binko, Michal, 267 53 Zebrak (CZ)
(74) Representative: Valeo Systèmes Thermiques

(56) References cited:
- EP-A2- 1 371 927
- EP-A2- 2 034 230
- US-A- 2 878 040
- US-A- 5 333 918
- US-A1- 2002 117 850
- US-A1- 2017 298 699

## Description

The present invention relates to the field of fluid refrigerant circuit, such as cooling systems or air conditioning systems, especially in a motor vehicle. The invention relates to fluid refrigerant circuit. Such refrigerant circuit is for example disclosed in document EP1371927A2.

Fluid refrigerant circuits form a closed loop in which a refrigerant fluid flows, in order to dissipate calories thanks to a heat exchanger. The loop of the fluid refrigerant circuit is mainly composed of the heat exchanger and pipes to connect the heat exchanger to the loop of the fluid refrigerant circuit, thus allowing the refrigerant fluid to flow through the heat exchanger.

In order to connect the pipes to the heat exchanger, known fluid refrigerant circuits use a connector, that links in a removable way two parts of the fluid refrigerant circuit. A first side of the connector is linked to the heat exchanger by a pipe, and a second side of the connector is linked to the portion of the fluid refrigerant circuit by a duct. Such known connector comprises a first chamber and a second chamber, the first chamber is intended to receive the duct and the second chamber is intended to receive the pipe coming from the heat exchanger, the first and second chambers being connected to each other by a channel.

The junction of the duct and the connector is removably sealed to prevent leakage of the refrigerant fluid at this site. The duct is inserted into the first chamber of the connector, said first chamber comprises a slot intended to receive rubber seal to insure the sealing at the junction between the duct and the first chamber of the connector. The duct is maintained in the first chamber by a screw connection.

The pipe inserted into the second chamber of the connector is unmovably brazed into said second chamber to prevent any leak of the heat transfer fluid. Brazing the pipe into the second chamber of the connector consists in melting a metal ring inserted around the pipe next to the connector, the metal used in the metal ring having a melting temperature lower than the melting temperature of the connector and pipe materials. The melted metal ring spreads between the pipe and the connector. Sealing of the pipe into the connector happens when the metal ring solidifies while cooling. Using of a chemical cleaning or purifying agent, known as flux, during the brazing step can help to improve sealing quality.

Brazing step may allow some contaminants such as an excess of flux and/or clad from the melted metal ring to migrate from the second chamber into the channel and/or into the first chamber of the connector. Presence of these contaminants into the channel and/or into the first chamber of the connector may lead to poor sealing quality of the first chamber, especially leading to leakage at the rubber seal area of the first chamber.

The invention aims at proposing a fluid refrigerant circuit comprising a connector with a specific design in order to prevent contaminants such as an excess of clad from the melted metal ring and/or flux to migrate from the second chamber into the channel and/or into the first chamber of the connector, thus improving the sealing quality of the duct inside said connector.

The invention also aims at proposing a fluid refrigerant circuit comprising a connector allowing to center the pipe into the second chamber of said connector while insuring brazing quality of said pipe on the connector.

The object of the invention is a fluid refrigerant circuit according to the technical features of claim 1.

Thus, contaminants such as an excess of clad from the melted metal ring and/or flux are retained into said contaminant-stopping mean and cannot migrate into the channel and/or the first chamber of the connector. Such configuration prevents degradation of the sealing area of the first chamber and reduces the risk of leakage at this sealing site. Furthermore, this configuration allows to have a fluid refrigerant circuit with improved sealing quality, thus resulting in a decreased leakage risk at said connector.

The first and second chambers each extend from outside the connector to the inside of the connector.

The step of the second chamber is the portion of the chamber oriented perpendicularly towards the inside of the connector.

The channel of the connector is a hole made through the connector, said channel allows the first chamber and the second chamber to communicate with each other. More precisely, the channel allows the fluid from the fluid refrigerant circuit to flow between the first chamber and the second chamber.

Connector comprised in the refrigerant circuit according to the invention, comprises optionally at least one of the following characteristics, taken alone or in combination :
- the first chamber comprises a slot intended to receive a rubber seal, said slot extends circumferentially around the channel of the connector. Said slot is realized on a second step that delimits the first chamber, said second step surrounding a mouth of the channel. Advantageously, the mouth of the channel and the first step of the second chamber extend along the same plane ;
- the diameter of the first chamber is larger than the diameter of the channel;
- Advantageously, the depth of the groove is at least 0,3 mm or one third of the pipe thickness. The depth of the groove is measured axially between a terminal plane of the first step of the second chamber and a plane of the bottom of the groove. The thickness of the pipe is measured between an inner diameter of said pipe and an outer diameter of said pipe;
- the angle between the axis of the channel and the chamfer of the second chamber measures between 20° to 70°. Advantageously, the angle between the axis of the channel and the chamfer of the second chamber measures 45°. This configuration allows the groove of the second chamber to retain most of the contaminants ;
- the second chamber comprises at least two diameters, a first diameter configured to maintain tightly the pipe in said second chamber, a second diameter configured to allow the clad and/or flux to spread all around the pipe.
- Moreover, the first diameter of the second chamber is smaller than the second diameter of the second chamber, the first diameter being localized axially at the first step of the second chamber of the connector compared to the second diameter. This configuration helps the insertion of the pipe into the second chamber thanks to the second diameter of said chamber, and the first diameter of said chamber helps to secure the centering of the pipe inserted into the said chamber. The second diameter creates an area between the pipe and the second diameter, allowing the clad and/or flux to spread all around the pipe in this area, thus improving the brazing quality. The first diameter creates a capillary gap between the pipe and the connector. Thanks to capillary forces, some clad and/or flux can migrate into this capillary gap, but most of the clad and/or flux is stopped into said capillary gap due to the thickness of said capillary gap. For example, said capillary gap thickness may be designed to measure between 0,05mm and 0,15mm. This configuration reduces the amount of clad and/or flux migrating toward the first step of the second chamber, thus improving sealing quality of the connector ;
- the diameter of the first chamber is larger than the second diameter of the second chamber;
- the first diameter of the second chamber is larger than the diameter of the channel ; This configuration allows the pipe not to enter inside said channel, said pipe comprising a diameter larger than the diameter of the channel and smaller than the first diameter of the second chamber ;
- the diameter of the channel is smaller than the diameter of the first chamber;
- the diameter of the channel is smaller than the diameter of the second chamber;
- the first chamber, the second chamber and the channel extend coaxially through the connector along an axis. The section of these chambers may be circular. More precisely, the axis of the first chamber, the second chamber and the channel connecting said first and second chambers are the same. Alternatively, the axis of the first chamber is orthogonal to the axis of the second chamber, the channel being configured to allow the first chamber to communicate with the second chamber ;
- the contaminant-stopping mean comprises a centering mean configured to center the pipe in the second chamber. This configuration allows the pipe to be radially centered into the second chamber, creating an area all around the pipe for the clad and/or flux to spread, thus improving brazing quality of the pipe onto a peripheral wall of the second chamber. Moreover, this configuration allows the use of a simple design of the connector, using the contaminant-stopping mean to realize several tasks ;
- the centering mean is the chamfer of the groove of the second chamber ;
- the connector comprises at least two different channels, each channel cooperating with a first chamber and a second chamber, as described previously. This configuration allows the connector to link one entry and one exit of the heat exchanger to the fluid refrigerant circuit. Not part of the invention, the contaminant-stopping mean may comprise a barrier defined by the groove and localized between this groove and the channel, said barrier extends parallel to an axis of said channel. The barrier extends circumferentially around the axis of the second chamber. The barrier is formed by a material extension of the block forming the connector. The barrier is localized radially towards the inside compared to the outer diameter of the groove. Advantageously, the barrier is localized radially towards the exterior compared to the perimeter of the channel, thus an inner diameter of the barrier is larger than the diameter of the channel. Alternatively, the inner diameter of the second chamber is equal to the diameter of the channel.

Other characteristics, details and advantages of the invention will stand out more clearly in the reading of the description given below for information purposes in connection with drawings in which :
- the figure 1 is a view in perspective of an example of a connector according to the invention, said connector being intended to connect a heat exchanger to a fluid refrigerant circuit;
- the figure 2 is a view in section of a first example of a connector, not part of the invention ;
- the figure 3 is a view in section of a second example of a connector, , comprised in the refrigerant circuit according to the invention ;
- the figure 4 is a detailed view in section of the second chamber of the connector shown in figure 2;
- the figure 5 is a detailed view in section of the second chamber of the connector shown in figure 3;
- the figure 6 is a detailed partial view in section of the second chamber of the connector shown in figure 3, a pipe being inserted into said second chamber of said connector.

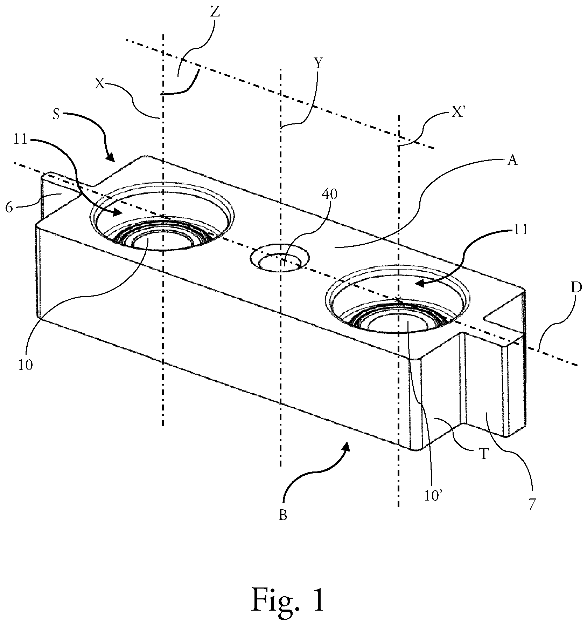

The figure 1 shows a connector 1 comprised in the refrigerant circuit according to the invention, said connector 1 being intended to link two parts of a fluid circuit.

The connector 1 comprises a first face A, and a second face B, said second face being localized at the opposite of the connector 1 compared to the first face A. The first face A and the second face B of the connector are parallel.

The connector 1 comprises a first side S and a second side T, said second side T being localized at the opposite of the connector 1 compared to the first side S. The first side S and the second side T of the connector 1 are parallel to each other. The first face A and the first side S extend perpendicularly to each other. In a similar way, the second face B and the second side T extend perpendicularly to each other.

The connector 1 comprises a first channel 10 extending along a first axis X and a second channel 10' extending along a second axis X'. The first axis X and the second axis X' are parallel to each other. The first axis X and the second axis X' define a plane Z, the connector extending along said plane Z. The first channel 10 extends circumferentially around the first axis X and the second channel 10' extends circumferentially around the second axis X.

The connector 1 extends along a main connector axis D, said main connector axis D extends perpendicular to the first axis X of the first channel 10. The main connector axis D also passes through the second axis X' of the second channel 10'. The connector 1 comprises a first protrusion 6 on its first side S, said first protrusion 6 extends from to connector towards the exterior along the main connector axis D, in a plan parallel to the plane Z of the connector 1. In a similar way, the connector 1 comprises a second protrusion 7 of its second side T, said second protrusion 7 extends from the connector 1 towards the exterior along the main connector axis D. Said in other words, the first protrusion 6 and second protrusion 7 extend parallel to each other from the connector 1 in an opposite direction along the plane Z defined by the first axis X and the second axis X'.

Each channel 10,10' allows a communication between the first face A of the connector 1 and the second B face of the connector 1.

A first chamber 11 according to the invention extends circumferentially around each axis X, X' of the channel 10,10' of the connector 1, each first chamber 11 is intended to receive a duct from a fluid refrigerant circuit.

The connector 1 also comprises a hole 40 intended to receive a screw, said screw is intended to press the connector 1 against the duct, sealing the duct into the first chamber 11 of the connector 1, said hole 40 extends along an axis Y, said hole axis Y extends along the plane Z of the connector. The hole 40 extends form the first face A of the connector 1 to the second face B of the connector 1.

The connector 1 is a metal block, for example made of an aluminum alloy, the first chamber 11, the first protrusion 6, the second protrusion 7, the hole 40, the first face A, the second face B, the first side S, the second side T, the first channel 10, the second channel 10' being machined into this metal block to obtain said connector 1.

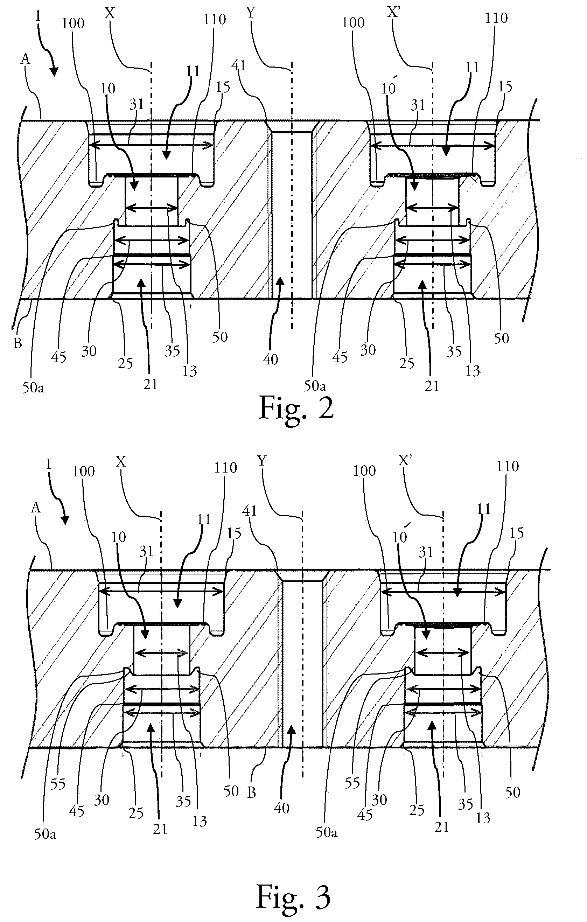

The figure 2 shows a view in section of a connector 1, said section extends along the plane Z of the connector 1. The connector 1 comprises two identical channels 10 arranged symmetrically to each other compared to the axis Y of the hole 40.

In the following description, a channel 10 is described, said following description applies to the second channel 10 of the connector 1.

The channel 10 cooperates with a first chamber 11 and a second chamber 21. The channel 10 is defined by a diameter 13, said diameter 13 being measured perpendicularly to the axis X of the channel 10.

The first chamber 11 extends circumferentially around the axis X, of the channel 10 with which said first chamber 11 communicates. The first chamber 11 comprises a second step surrounding a mouth of the channel 10, said second step extends circumferentially around the axis X of the channel. The first chamber 11 comprises a furrow 100 localized at in the second step of the first chamber 11 of the first chamber 11, said furrow 100 extends circumferentially around the axis X, of the channel 10. The first chamber 11 comprises a slot 110 intended to receive a rubber seal, said slot 110 extends circumferentially around the axis X, of the channel 10. The rubber seal inserted against the slot 110 of the first chamber 11 of the connector 1 allows the sealing between a duct inserted into said first chamber 11, thus avoiding leaks at this site.

The first chamber 11 is defined by a diameter 31, the bore of the diameter 31 of the first chamber 11 being parallel to the bore of the diameter 13 of the channel 10. The diameter 31 of the first chamber 11 is larger than the diameter 13 of the channel 10.

The connector 1 comprises a second chamfer 15 that connects the first face A of the connector 1 and the peripheral wall that defines the first chamber 11. This configuration helps the insertion of a duct into the first chamber 11 of the connector 1.

The second chamber 21 extends circumferentially around the axis X of the channel 10. The second chamber 21 of the connector 1 is localized at the opposite of said first chamber 11 versus the channel 10. The channel 10 cooperating with the first chamber 11 and the second chamber 21 is localized between said first chamber 11 and said second chamber 21.

The second chamber 21 comprises a contaminant-stopping mean 50a localized axially at the opposite of the second chamber 21 compared to the second face B of the connector 1. The contaminant-stopping mean 50a extends circumferentially around the channel 10. This contaminant-stopping mean 50a avoids contaminants, such as excess of clad and/or flux, to migrate into the first chamber 11, improving the sealing quality in said first chamber 11. The contaminant-stopping mean 50a comprises a groove 50 that extends circumferentially around the channel 10.

The connector 1 comprises a third chamfer 25 localized between the second face B of the connector 1 and a second diameter 35 of the second chamber 21, said third chamfer 25 extending circumferentially around the axis X, of the channel 10.

The second chamber 21 comprises a first diameter 30 and a second diameter 35. The first diameter 30 is localized axially between the channel 10 of the connector 1 and the second diameter 35 of the second chamber 21. The first diameter 30 is smaller than the second diameter 35. The first diameter 30 of the second chamber 21 is larger than the diameter 13 of the channel 10.

The connector 1 comprises a fourth chamfer 45 between the first diameter 30 and the second diameter 35 of the second chamber 21, said fourth chamfer 45 extends circumferentially around the axis X, of the channel 10.

The second diameter 35 of the second chamber 21 extends from the second face B of the connector 1 to the fourth chamfer 45 of the second chamber 21. The first diameter 30 of the second chamber 21 extends from the fourth chamfer 45 of the second chamber 21 to the groove 50 of said second chamber 21. The hole 40 of the connector 1 extends along the hole axis Y, said hole axis Y being parallel to the axis X of the channel 10. The hole 40 extends from the first side A of the connector 1 to the second side B of the connector 1.

The figure 3 shows a view in section of a connector 1 comprised in the refrigerant circuit according to the invention, said section extends along the plane Z of the connector 1. The connector 1 comprises a fifth chamfer 55 that extends from the bottom 53 of the groove 50 to the second chamber 21, the bottom 53 of the groove 50 being the area where the contaminants are retained. The fifth chamfer 55 of the groove 50 of the second chamber 21 extend circumferentially around the axis X, of the channel 10. The fifth chamfer 55 of the connector 1 and the channel 10 form an angle 65. The description of the connector 1 shown in figure 2 is also valid for the connector 1 shown in figure 3 except for the design of the contaminant-stopping mean 50a.

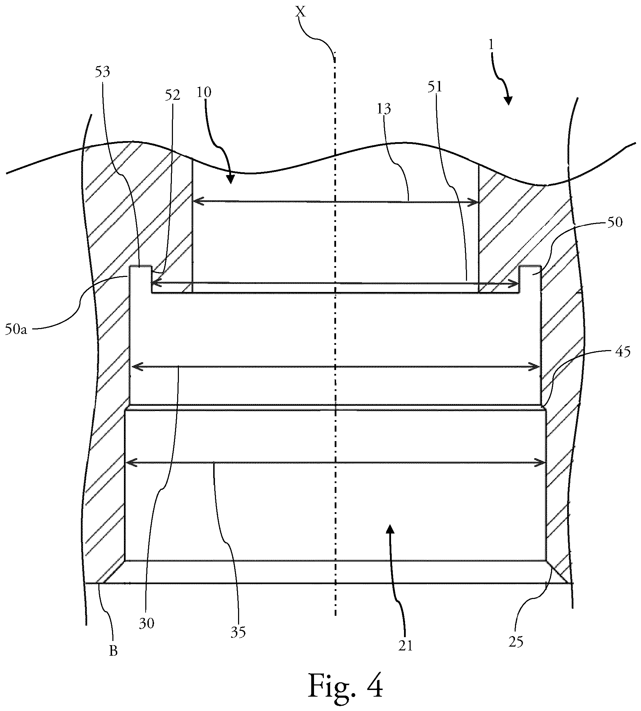

The figure 4 is a detailed view in section of the second chamber 21 shown in figure 2, said section extends along the plane Z of the connector 1. The contaminant-stopping mean 50a of the second chamber 21 comprises a barrier 52 that extends parallel to the axis X, of the channel, said barrier 52 being formed by the groove 50. In shown example, the inner diameter 51 of the groove 50 is larger than the diameter 13 of the channel 10. The barrier 52 in combination with the groove 50 thus allow the groove 50 to retain contaminants such as excess of clad and/or flux. Consequently, such contaminants cannot pass into the channel 10 nor into the first chamber 11 of the connector 1, avoiding pollution of the slot where the rubber seal extends.

The groove 50 of the contaminant-stopping mean 50a is localized axially at the opposite of the second chamber 21 compared to the second face B of the connector 1. The outer radial wall of the groove 50 is the first diameter 30 of the second chamber 21. The inner radial end of the groove 50 is larger than the channel 10. The inner radial wall of the groove 50 is parallel to the axis X of the channel 10. The groove 50 of the second chamber 21 is intended to retain contaminants such as excess of clad and/or flux, such contaminants being generated during a brazing step of a pipe into the second chamber 21 of the connector 1, thus preventing said contaminants to pass into the channel 10 and/or the first chamber 11 of the connector 1.

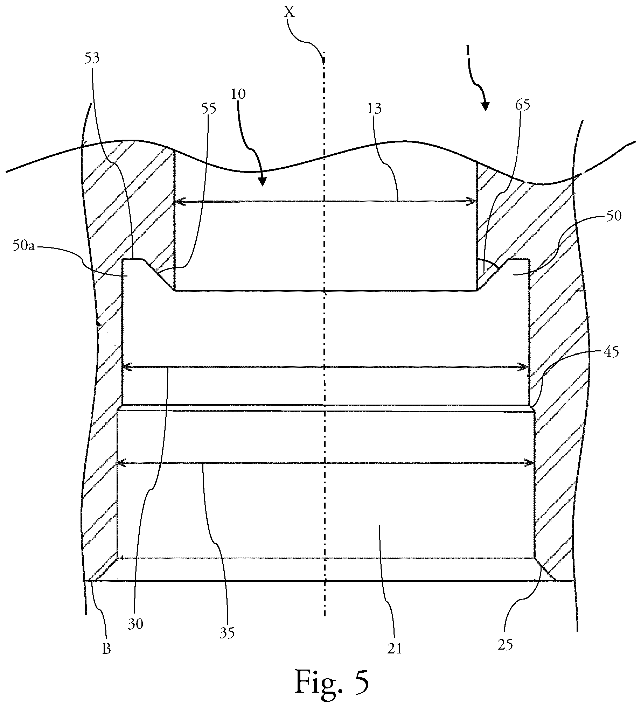

The figure 5 is a detailed view in section of the second chamber 21 shown in figure 3, said section extends along the plane Z of the connector 1. In this example, the angle 65 between the fifth chamfer 55 of the connector 1 and the channel 10 measures 45°. According to the invention, a connector 1 may include an angle value between the fifth chamfer 55 of the connector 1 and the channel 10, said angle value being advantageously comprised between 20° and 70°. The description of the second chamber 21 shown in figure 4 is also valid for the second chamber 21 shown in figure 5, except from the design of the contaminant-stopping mean 50a.

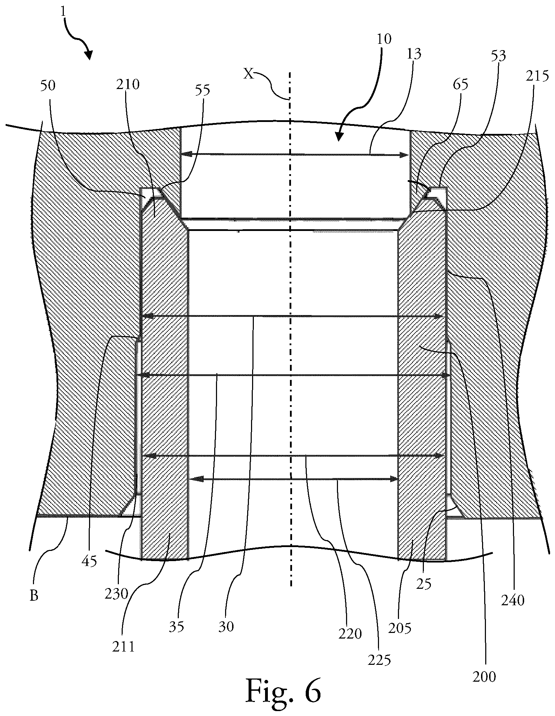

The figure 6 is a partial view in section of the connector 1 shown in figure 3. A pipe 200 is inserted into the second chamber 21 of the connector 1. The pipe 200 comprises a first extremity 210, said first extremity 210 being localized towards the channel 10 of the connector 1. The first extremity 210 of the pipe 200 comes against the fifth chamfer 55 of the connector 1 in the second chamber 21. More precisely, the first extremity 210 of the pipe 200 comprises a chamfer 215, said chamfer 215 forming an angle with the channel 10, said angle having the same value, or approximately the same value, than the angle 65 between the fifth chamfer 55 of the connector 1 and the channel 10.

The first extremity 210 of the pipe 200 extends partially inside the groove 50, the groove 50 being designed in order to have a free part to collect the excess of clad and/or flux generated during the brazing of the pipe 200 inside the second chamber 21.

The pipe 200 comprises an external diameter 220, said external diameter 220 is slightly smaller than the first diameter 30 of the second chamber 21. The external diameter 220 of the pipe 200 is constant all along the portion of the pipe 200 inserted into the second chamber 21. The external diameter 220 of the pipe 200 is smaller than the second diameter 35 of the second chamber 21, allowing clad and/or flux used during a brazing step to spread all around the pipe 200 in a space 230 between the second diameter 35 of the second chamber 21 and the pipe 200, said space 230 extending circumferentially around the axis X, of the channel 10. The pipe 200 comprises an inner diameter 225 configured to allow the fluid of a fluid refrigerant circuit to flow into the pipe 200.

Figure 6 shows also a capillary gap 240 which is formed between the first diameter 30 of the second chamber 21 and the external diameter 220 of said pipe 200 inserted into said second chamber 21 of the connector 1. The capillary gap 240 extends circumferentially around the axis X, of the channel 10. This capillary gap 240 allows some clad and/or flux to migrate between the first diameter 30 of the second chamber 21 and the pipe 200 due to capillary forces, improving sealing of said pipe 200 into the connector 1.

The space 230 extends from the second face B of the connector 1 to the fourth chamfer 45 of the connector 1. The capillary gap extends from the fourth chamfer 45 of the connector 1 to the groove 50 of the second chamber 21. The outer diameter of the capillary gap 240 is smaller the outer diameter of the space 230.

## Claims

1. Fluid refrigerant circuit comprising a connector (1) and a heat exchanger, said fluid refrigerant circuit comprising also at least one pipe (200) connected to said heat exchanger, said pipe (200) being brazed into at least a second chamber (21) of said connector (1), said connector (1) comprises at least a first chamber (11) and the at least second chamber (21) connected to each other by a channel (10, 10'), the second chamber (21) comprising a first step that surrounds an opening of the channel (10, 10'), the first chamber (11) is configured to receive at least one duct of the fluid refrigerant circuit and the second chamber (21) is configured to receive the pipe (200), **characterized in that** the second chamber (21) comprises a contaminant-stopping mean (50a) localized at the first step of said second chamber (21), wherein the contaminant-stopping mean (50a) comprises a groove (50) localized between the channel (10, 10') of the connector (1) and the second chamber (21), said groove (50) extends circumferentially around the channel (10, 10') of the connector (1), wherein the groove (50) of the second chamber (21) comprises a chamfer (55) that extends from a bottom (53) of said groove (50) to the channel (10, 10').

2. Fluid refrigerant circuit according to claim 1, wherein the second chamber (21) comprises at least two diameters (30, 35), a first diameter (30) configured to maintain
tightly the pipe (200) in said second chamber (21), a second diameter (35) configured to allow clad and/or flux to spread all around the pipe (200).

3. Fluid refrigerant circuit according to the previous claim wherein the first diameter (30) of the second chamber (21) is smaller than the second diameter (35) of the second chamber (21), the first diameter (30) being localized axially at the first step of said second chamber (21) of the connector (1) compared to the second diameter (35).

4. Fluid refrigerant circuit according to claim 1 wherein the angle (65) between the axis (X, X') of the channel (10, 10') and the chamfer (55) of the groove (50) of the second chamber (21) measures between 20° to 70°.

5. Fluid refrigerant circuit according to one of the previous claims wherein the contaminant-stopping mean (50a) comprises a centering mean (55) configured to center the pipe (200) in the second chamber (21).

6. Fluid refrigerant circuit according to the previous claim wherein the centering mean (55) is the chamfer (55) of the groove (50) of the second chamber (21).

## Patentansprüche

1. Flüssigkältemittelkreislauf, einen Steckverbinder (1) und einen Wärmetauscher umfassend, wobei der Flüssigkältemittelkreislauf auch mindestens ein Rohr (200) umfasst, das mit dem Wärmetauscher verbunden ist, wobei das Rohr (200) in mindestens einer zweiten Kammer (21) des Steckverbinders (1) hartgelötet ist, wobei der Steckverbinder (1) mindestens eine erste Kammer (11) und die mindestens zweite Kammer (21) umfasst, die durch einen Kanal (10, 10') miteinander verbunden sind, wobei die zweite Kammer (21) eine erste Stufe umfasst, die eine Öffnung des Kanals (10, 10') umgibt, die erste Kammer (11) eingerichtet ist, um mindestens ein Rohr des Flüssigkältemittelkreislaufs aufzunehmen, und die zweite Kammer (21) eingerichtet ist, um das Rohr (200) aufzunehmen, **dadurch gekennzeichnet, dass** die zweite Kammer (21) ein Verunreinigungsrückhaltemittel (50a) umfasst, das an der ersten Stufe der zweiten Kammer (21) lokalisiert ist, wobei das Verunreinigungsrückhaltemittel (50a) eine Rille (50) umfasst, die zwischen dem Kanal (10, 10') des Steckverbinders (1) und der zweiten Kammer (21) lokalisiert ist, wobei sich die Rille (50) rings um den Kanal (10, 10') des Steckverbinders (1) herum erstreckt, wobei die Rille (50) der zweiten Kammer (21) eine Anfasung (55) umfasst, die sich von einem Boden (53) der Rille (50) zu dem Kanal (10, 10') erstreckt.

2. Flüssigkältemittelkreislauf nach Anspruch 1, wobei die zweite Kammer (21) mindestens zwei Durchmesser (30, 35) umfasst, einen ersten Durchmesser (30), der eingerichtet ist, um das Rohr (200) in der zweiten Kammer (21) dicht zu halten, einen zweiten Durchmesser (35), der eingerichtet ist, um zu ermöglichen, dass Plattierung und/oder Flussmittel sich ganz um das Rohr (200) herum verteilen.

3. Flüssigkältemittelkreislauf nach dem vorhergehenden Anspruch, wobei der erste Durchmesser (30) der zweiten Kammer (21) kleiner ist als der zweite Durchmesser (35) der zweiten Kammer (21), wobei der erste Durchmesser (30) im Vergleich zu dem zweiten Durchmesser (35) axial an der ersten Stufe der zweiten Kammer (21) des Steckverbinders (1) lokalisiert ist.

4. Flüssigkältemittelkreislauf nach Anspruch 1 wobei der Winkel (65) zwischen der Achse (X, X') des Kanals (10, 10') und der Anfasung (55) der Rille (50) der zweiten Kammer (21) zwischen 20° und 70° misst.

5. Flüssigkältemittelkreislauf nach einem der vorhergehenden Ansprüche, wobei das Verunreinigungsrückhaltemittel (50a) ein Zentriermittel (55) umfasst, das eingerichtet ist, um das Rohr (200) in der zweiten Kammer (21) zu zentrieren.

6. Flüssigkältemittelkreislauf nach dem vorhergehenden Anspruch, wobei das Zentriermittel (55) die Anfasung (55) der Rille (50) der zweiten Kammer (21) ist.

## Revendications

1. Circuit de fluide frigorigène, comprend un raccord (1) et un échangeur de chaleur, ledit circuit de fluide frigorigène comprenant également au moins une canalisation (200) raccordée audit échangeur de chaleur, ladite canalisation (200) étant brasée dans au moins une seconde chambre (21) dudit raccord (1), ledit raccord (1) comprend au moins une première chambre (11) et au moins la seconde chambre (21) raccordées entre elles par un canal (10, 10'), la seconde chambre (21) comprenant un premier gradin qui entoure une ouverture du canal (10, 10'), la première chambre (11) est configurée pour recevoir au moins une conduite du circuit de fluide frigorigène et la seconde chambre (21) est configurée pour recevoir la canalisation (200), **caractérisé en ce que** la seconde chambre (21) comprend un moyen d'arrêt de contaminant (50a) localisé au niveau du premier gradin de ladite seconde chambre (21), dans lequel le moyen d'arrêt de contaminant (50a) comprend une rainure (50) localisée entre le canal (10, 10') du raccord (1) et la seconde chambre (21), ladite rainure (50) s'étend circonférentiellement autour du canal (10, 10') du raccord (1), dans lequel la rainure (50) de la seconde chambre (21) comprend un chanfrein (55) qui s'étend depuis un fond (53) de ladite rainure (50) vers le canal (10, 10').

2. Circuit de fluide frigorigène selon la revendication 1, dans lequel la seconde chambre (21) comprend au moins deux diamètres (30, 35), un premier diamètre (30) configuré pour maintenir étroitement la canalisation (200) dans ladite seconde chambre (21), un second diamètre (35) configuré pour permettre que la gaine et/ou le flux s'étalent tout autour de la canalisation (200).

3. Circuit de fluide frigorigène selon la revendication précédente dans lequel le premier diamètre (30) de la seconde chambre (21) est plus petit que le second diamètre (35) de la seconde chambre (21), le premier diamètre (30) étant localisé axialement au niveau du premier gradin de ladite seconde chambre (21) du raccord (1) comparativement au second diamètre (35).

4. Circuit de fluide frigorigène selon la revendication 1 dans lequel l'angle (65) entre l'axe (X, X') du canal (10, 10'), et le chanfrein (55) de la rainure (50) de la seconde chambre (21) mesure entre 20° et 70°.

5. Circuit de fluide frigorigène selon l'une des revendications précédentes dans lequel le moyen d'arrêt de contaminant (50a) comprend un moyen de centrage (55) configuré pour centrer la canalisation (200) dans la seconde chambre (21).

6. Circuit de fluide frigorigène selon la revendication précédente dans lequel le moyen de centrage (55) est le chanfrein (55) de la rainure (50) de la seconde chambre (21).
